# EUROPEAN PATENT APPLICATION

(11) **EP 2 394 731 A1**
(43) Date of publication of application: **14.12.2011**
(21) Application number: 11180826.7
(22) Date of filing: 19.12.2005
(51) Int. Cl.: B01D 65/02, B01D 61/12, B01D 63/02, C02F 1/44

(54) **Cleaning in membrane filtration systems**

(30) Priority: 24.12.2004 AU 2004907391
(62) Divisional of application: 05818584.4
(71) Applicant: Siemens Industry, Inc., Alpharetta, GA 30005-4437 (US)
(72) Inventor: Beck, Thomas William, North Richmond, New South Wales 2756 (AU); Johnson, Warren Thomas, Grose Wold, New South Wales 2753 (AU); Yeo, Rebecca, 100028 Dongzhimen (CN)
(74) Representative: French, Clive Harry

(57) **Abstract**

A method of controlling a chemical clean of a membrane comprising: increasing the amount of chemical cleaning agent present during the clean; measuring membrane resistance of a membrane for at least a portion of said clean; ceasing the increase in chemical cleaning agent when membrane resistance attains a predetermined value.

## Description

### FIELD OF THE INVENTION

The present invention relates to the backwashing of hollow permeable membranes used in membrane filtration systems and, in particular, to an improved method of backwashing and cleaning the hollow permeable membranes.

### BACKGROUND ART

Any discussion of the prior art throughout the specification should in no way be considered as an admission that such prior art is widely known or forms part of common general knowledge in the field.

Known backwash systems include those described in our earlier International Application No. WO93/02779 the subject matter of which is incorporated herein by cross-reference.

During cleaning of membranes, cleaning solutions are often flowed through the membranes and their permeable walls to clean foulants from the membranes. Applying the cleaning solution under pressure assists the removal of foulants from the surface.

The typical known cleaning procedure for membranes involves cleaning the membranes in-situ. This procedure adds a set concentration of chemical, commonly 2% citric acid followed by 200 ― 1000 ppm sodium hypochlorite, to the membrane in a solution of filtrate. This usually occurs at the start of the two hour cleaning period, after which the cleaning solution is filtered through the membrane and left to soak.

As the nature of membrane fouling varies according to feed quality and type, flux through the membrane and hours of operation, the amount and length of chemical cleaning required in each situation also varies. This often results in a one process fits all approach where a standard chemical cleaning stage is applied regardless of the amount of fouling. This can lead to large amounts of cleaning solution being used unnecessarily with the effect of additional cost and environmental impact in disposing of the waste solution after cleaning is complete.

### DISCLOSURE OF THE INVENTION

It is an object of the invention to overcome or at least ameliorate one or more of the disadvantages of the prior art or at least provide a useful alternative.

According to a first aspect, the present invention provides a method of cleaning permeable, hollow membranes in an arrangement of the type wherein a pressure differential is applied across the walls of the permeable, hollow membranes immersed in a liquid suspension, said liquid suspension being applied to the outer surface of the porous hollow membranes to induce and sustain filtration through the membrane walls wherein:
(a) some of the liquid suspension passes through the walls of the membranes to be drawn off as clarified liquid or permeate from the hollow membrane lumens, and
(b) at least some of the solids are retained on or in the hollow membranes or otherwise as suspended solids within the liquid surrounding the membranes,
the method of cleaning comprising the steps of;
i) removing, at least partially, liquid from the filtrate side of the membrane;
ii) removing, at least partially, liquid from the outer side of the membrane;
iii) applying a cleaning solution to the outer side of the membrane;
iv) applying a pressure differential across said membrane wall to cause flow of said cleaning solution through said wall from the outer side of the membrane into the membrane lumen to at least partially fill said lumen with cleaning solution;
v) isolating the outer side of the membrane;
vi) applying a pressurized gas to the filtrate side of the membrane wall to cause flow of the cleaning solution back to the outer side through the membrane wall;
vii) accumulating the increased pressure developed on the outer side of the membrane as a result of said flow of cleaning solution;
viii) releasing the pressure applied by said pressurised gas to said filtrate side of the membrane wall to cause flow of said cleaning solution through said membrane from the outer side to the filtrate side under the effect of said accumulated pressure on the outer side of the membrane wall.

For preference the cleaning solution is a chemical cleaning solution.

Preferably, in step vi) gas, usually air, is applied such that the membrane lumen is substantially drained of cleaning solution. Preferably the pressure is accumulated in step vii) in a gas space provided on the outer side of the membrane wall or alternatively in a bladder arrangement.

The differential pressure of step iv) may be provided by applying gas pressure to the outer side of the membrane wall or by applying a vacuum to the filtrate side.

According to a further aspect the present invention provides a method of cleaning permeable, hollow membranes in an arrangement of the type wherein a pressure differential is applied across the walls of the permeable, hollow membranes immersed in a liquid suspension, said liquid suspension being applied to the outer surface of the porous hollow membranes to induce and sustain filtration through the membrane walls wherein:
(a) some of the liquid suspension passes through the walls of the membranes to be drawn off as clarified liquid or permeate from the hollow membrane lumens, and
(b) at least some of the solids are retained on or in the hollow membranes or otherwise as suspended solids within the liquid surrounding the membranes,
the method of cleaning comprising the steps of;
i) applying a cleaning solution to one side of the membrane wall;
ii) applying a pressure differential across said membrane wall to cause flow of said cleaning solution through said wall from said one side of the membrane wall to the other side of the membrane wall;
iii) applying a reverse pressure differential across said membrane wall to cause flow of said cleaning solution through said wall from said other side of the membrane wall back to said one side of the membrane wall.

According to yet a further aspect the present invention provides a method of cleaning permeable, hollow membranes in an arrangement of the type wherein a pressure differential is applied across the walls of the permeable, hollow membranes immersed in a liquid suspension, said liquid suspension being applied to the outer surface of the porous hollow membranes to induce and sustain filtration through the membrane walls wherein:
(a) some of the liquid suspension passes through the walls of the membranes to be drawn off as clarified liquid or permeate from the hollow membrane lumens, and
(b) at least some of the solids are retained on or in the hollow membranes or otherwise as suspended solids within the liquid surrounding the membranes,
the method of cleaning comprising the steps of;
i) removing, at least partially, liquid from the filtrate side of the membrane;
ii) removing, at least partially, liquid from the outer side of the membrane;
iii) applying a cleaning solution to the outer side of the membrane;
iv) applying a pressure differential across said membrane wall to cause flow of said cleaning solution through said wall from the outer side of the membrane into the membrane lumen to at least partially fill said lumen with cleaning solution;
v) applying a pressure differential across said membrane wall to cause flow of said cleaning solution through said wall from the lumen side of the membrane back to the outer side of the membrane lumen.

Preferably the pressure differential in step v) is produced by applying a pressurized gas to the filtrate side of the membrane wall to cause flow of the cleaning solution back to the outer side through the membrane wall.

The cleaning process can be repeated in cycles such that the cleaning solution is alternately moved from one side of the membrane to the other through the membrane wall.

The process can be applied to membranes submerged in an open vessel as well as pressurized membrane filtration systems.

According to another aspect of the present invention there is provided a method of controlling a chemical clean of a membrane comprising:
measuring pH and/or membrane resistance of a membrane for at least a portion of said clean; and
ceasing said chemical clean when pH and/or membrane resistance attains a predetermined value.

According to another aspect of the present invention there is provided a method of controlling a chemical clean of a membrane comprising:
measuring pH and/or membrane resistance of a membrane for at least a portion of said clean;
measuring elapsed time of the clean;
calculating a rate of change of pH with respect to time (dpH/dt) and/or a rate of change of membrane resistance (dR/dt) with respect to time; and
ceasing said chemical clean when dpH/dt and/or dR/dt attains a predetermined value.

According to another aspect of the present invention there is provided a method of controlling the chemical cleaning of a filtration system comprising the steps of
measuring membrane resistance of a membrane for at least a portion of said clean;
measuring elapsed time of the clean;
calculating a rate of change of membrane resistance (dR/dt) with respect to time; and
using dR/dt to calculate a duration for completion of the clean.

According to another aspect of the present invention there is provided a method of controlling a chemical clean of a membrane comprising:
increasing the amount of chemical cleaning agent present during the clean;
measuring membrane resistance of a membrane for at least a portion of said clean;
ceasing the increase in chemical cleaning agent when membrane resistance attains a predetermined value.

Preferably, the amount of cleaning agent is increased incrementally. For preference, the predetermined value approximates a steady-state value of membrane resistance. Preferably, the membranes are microfiltration or ultrafiltration type membranes.

### BRIEF DESCRIPTION OF THE DRAWINGS

Preferred embodiments of the invention will now be described, by way of example only, with reference to the accompanying drawings in which:
Figure 1a shows a simplified sectional side elevation of a membrane module with a lower portion of the module immersed in a chemical cleaning solution and suction applied to the membrane lumens;
Figure 1b shows an enlarged sectional view of the membranes in the indicated region of Figure 1 a;
Figure 1c shows an enlarged sectional view of the membranes in the indicated region of Figure 1a;
Figure 2a shows a simplified sectional side elevation of a membrane module of Figure 1 with a lower portion of the module immersed in a chemical cleaning solution and pressurized gas applied to the membrane lumens;
Figure 2b shows an enlarged sectional view of the membranes in the indicated region of Figure 2a;
Figure 3a shows a simplified sectional side elevation of a membrane module of Figure 1 with a lower portion of the module immersed in a chemical cleaning solution and suction applied to the membrane lumens;
Figure 3b shows an enlarged sectional view of the membranes in the indicated region of Figure 3a;
Figure 3c shows an enlarged sectional view of the membranes in the indicated region of Figure 3a;
Figure 4a shows a simplified sectional side elevation of another embodiment of a membrane module with a lower portion of the module immersed in a chemical cleaning solution and suction applied to the membrane lumens;
Figure 4b shows an enlarged sectional view of the membranes in the indicated region of Figure 4a;
Figure 4c shows an enlarged sectional view of the membranes in the indicated region of Figure 4a;
Figure 5a shows a simplified sectional side elevation of the membrane module of Figure 4 with a lower portion of the module immersed in a chemical cleaning solution and pressurized gas applied to the membrane lumens;
Figure 5b shows an enlarged sectional view of the membranes in the indicated region of Figure 5a;
Figure 6a shows a simplified sectional side elevation of another embodiment of a membrane module with a lower portion of the module immersed in a chemical cleaning solution and suction applied to the membrane lumens;
Figure 6b shows an enlarged sectional view of the membranes in the indicated region of Figure 6a;
Figure 6c shows an enlarged sectional view of the membranes in the indicated region of Figure 6a;
Figure 7a shows a simplified sectional side elevation of the membrane module of Figure 6 with a lower portion of the module immersed in a chemical cleaning solution and pressurized gas applied to the membrane lumens;
Figure 7b shows an enlarged sectional view of the membranes in the indicated region of Figure 7a;
Figure 8a shows a simplified sectional side elevation of an embodiment of a membrane module in an open vessel with a lower portion of the module immersed in a chemical cleaning solution and suction applied to the membrane lumens;
Figure 8b shows an enlarged sectional view of the membranes in the indicated region of Figure 8a;
Figure 8c shows an enlarged sectional view of the membranes in the indicated region of Figure 8a;
Figure 9a shows a simplified sectional side elevation of a membrane module of the embodiment of Figure 8 with a lower portion of the module immersed in a chemical cleaning solution and pressurized gas applied to the membrane lumens;
Figure 9b shows an enlarged sectional view of the membranes in the indicated region of Figure 9a;
Figure 10 shows a graph of transmembrane pressure (TMP) measured over time for a membrane module of the type illustrated in Figures 8 and 9 undergoing a chemical clean using the method according to the invention;
Figure 11 shows a graph of membrane resistance measured over time for two types of chemical cleaning process with incremental increases in the volume of chemical cleaning agent added during the cleaning process; and
Figure 12 shows a graph of membrane resistance measured over time with incremental increases in the volume of chemical cleaning agent added during the cleaning process.

### DESCRIPTION OF PREFERRED EMBODIMENTS

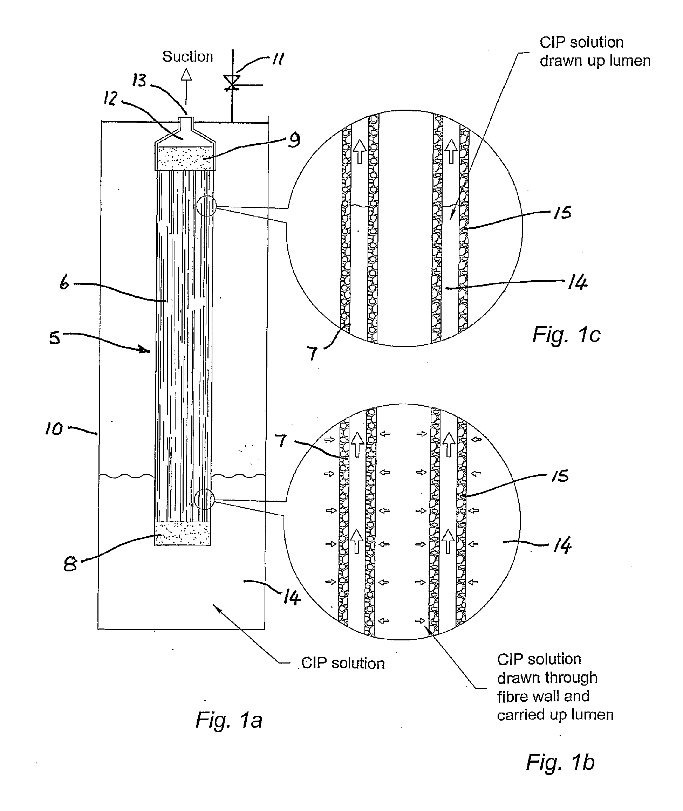

Referring to the Figures 1 to 7, there is shown a membrane module 5 having a plurality of hollow fibre membranes 6. The fibre membranes 6 have their lumens 7 closed at the lower end in a lower pot 8 and open at the upper end through upper pot 9. The module 5 is contained in a vessel 10 having a controllable valve 11 for opening/closing the vessel 10 to atmosphere. Upper pot 8 is connected to a filtrate collection chamber 12 having a port 13.

One embodiment of the cleaning process according to the invention will now be described with reference to Figures 1 to 3. As best shown in Figures 1a to 1c, liquid remaining in lumens 7 after filtration is drained while liquid remaining in the vessel 10 is also at least partially drained. The vessel 10 is then, at least partially, filled with cleaning solution 14 as best shown in Figure 1 a. A differential pressure is then applied across the membrane walls 15, in this embodiment by applying a vacuum to port 13, so that the cleaning solution 14 is drawn through the membrane walls 15 (as shown in Figure 1b) and up the membrane lumen 7 until it is, at least partially, filled with cleaning solution.

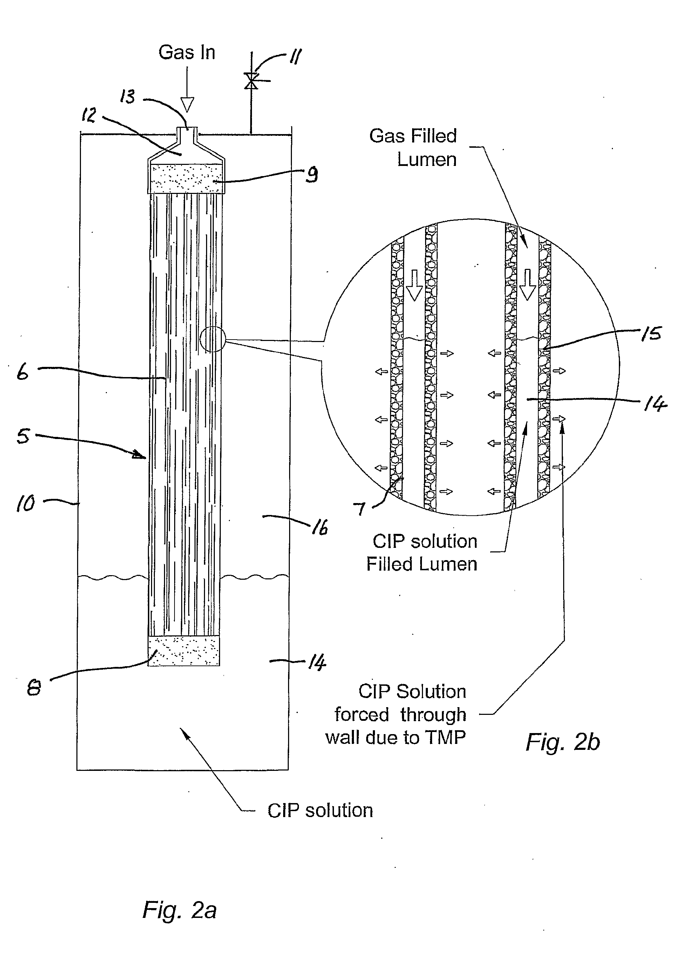

As shown in Figures 2a and 2b, the valve 11 is then closed to isolate the vessel 10 while pressurized gas is applied through port 13 to the cleaning solution filling the membrane lumen 7 and displaced through the membrane wall 15 until the lumen 7 is substantially drained of cleaning solution. With the vessel 10 isolated, the transfer of cleaning solution 14 through the membrane wall 15 to the outer side of the membrane 6 results in the pressure within the vessel to increase as the gas space 16 within the vessel 10 is compressed.

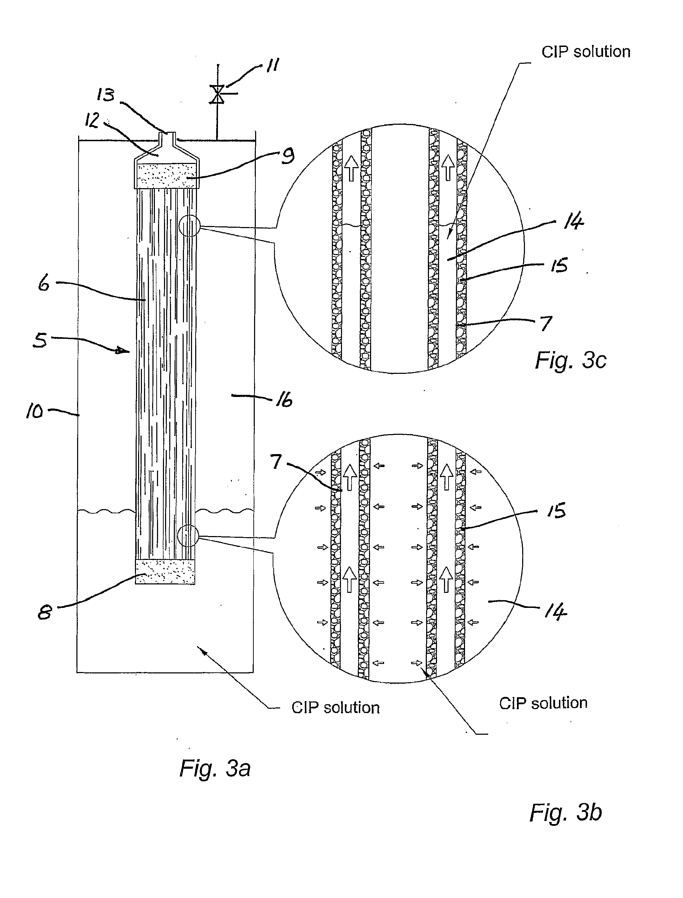

As shown in Figures 3a to 3c, the lumen side of the membranes are vented to atmosphere. The accumulated pressure in the gas space 16 then forces the cleaning solution 14 to flow back through the membrane wall 15 as best shown in Figure 3b.

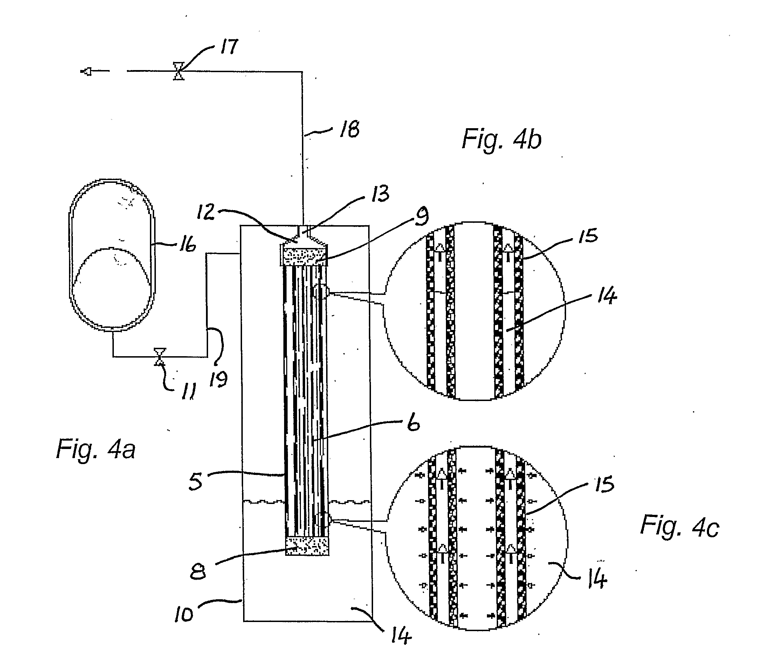

Figures 4a to 7b illustrate embodiments of the invention where a bladder arrangement may be used instead of the gas space 16 to accumulate pressure.

Referring to Figures 4a to 4c, the operation is similar to that shown in Figure 3a to 3c, however, in this embodiment when the lumen side of the membranes is vented to atmosphere through valve 17, the bladder 16 delivers pressure to the feed side of the vessel 10 forcing the cleaning solution 14 through the membrane wall 15 and along the membrane lumen 7 as best shown in Figures 4b and 4c.

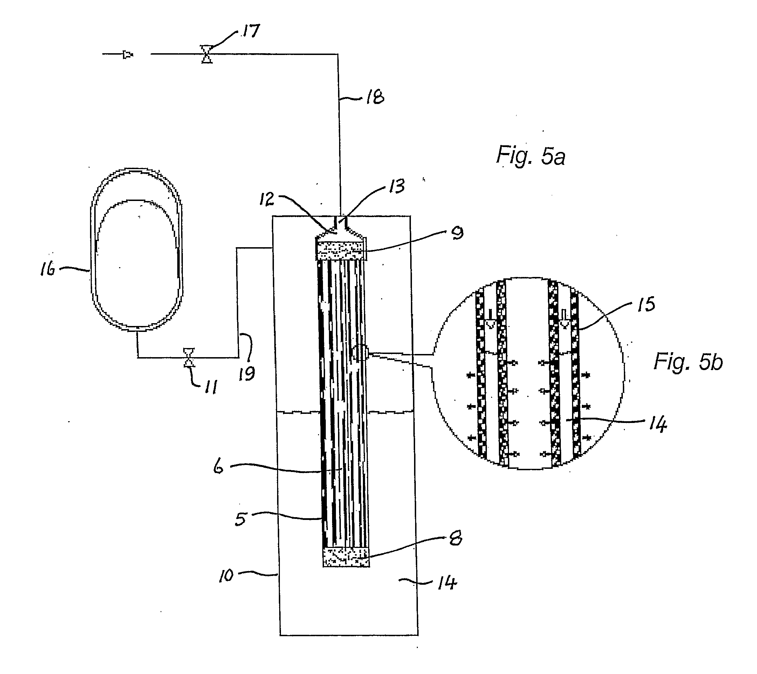

Referring to Figures 5a and 5b, the pressurising of the lumen/filtrate side is shown. Pressurised gas is applied to the lumen/filtrate side of the membranes 6 by feeding pressurised gas through line 18 and valve 17 to port 13. The pressurised gas causes the cleaning solution within the lumen 7 to flow through the membrane wall 15 to the outer side of the membrane resulting in the pressure within the vessel 10 increasing and being transferred to the bladder 16 connected to the vessel 10 through line 19 and valve 11.

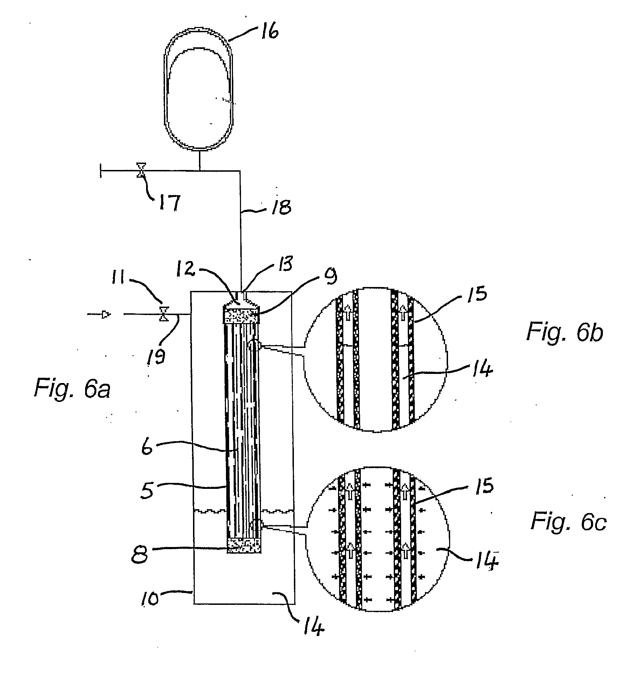

Figures 6a to 6c show a similar arrangement to Figures 4a to 4c but in this embodiment the gas pressure is applied to the vessel 10 from an external source, rather than the bladder 16, through line 19 and valve 11. Bladder 16 is used to accumulate pressure on the lumen side of the membranes 6 as shown in Figure 6a.

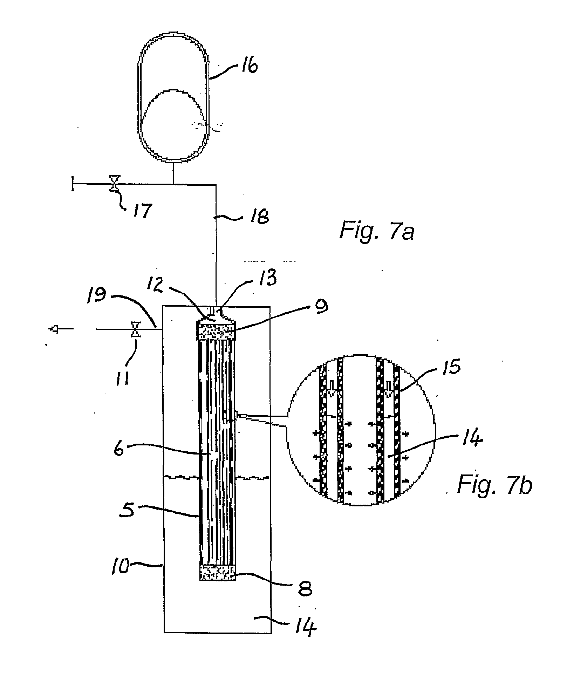

As shown in Figures 7a and 7b, when the reverse flow of cleaning solution is required, the vessel 10 is vented to atmosphere through line 19 and valve 11 and bladder 16 releases accumulated pressure to the lumen side forcing the cleaning solution 14 within the lumens back through the lumen walls 15 (see Figure 7b).

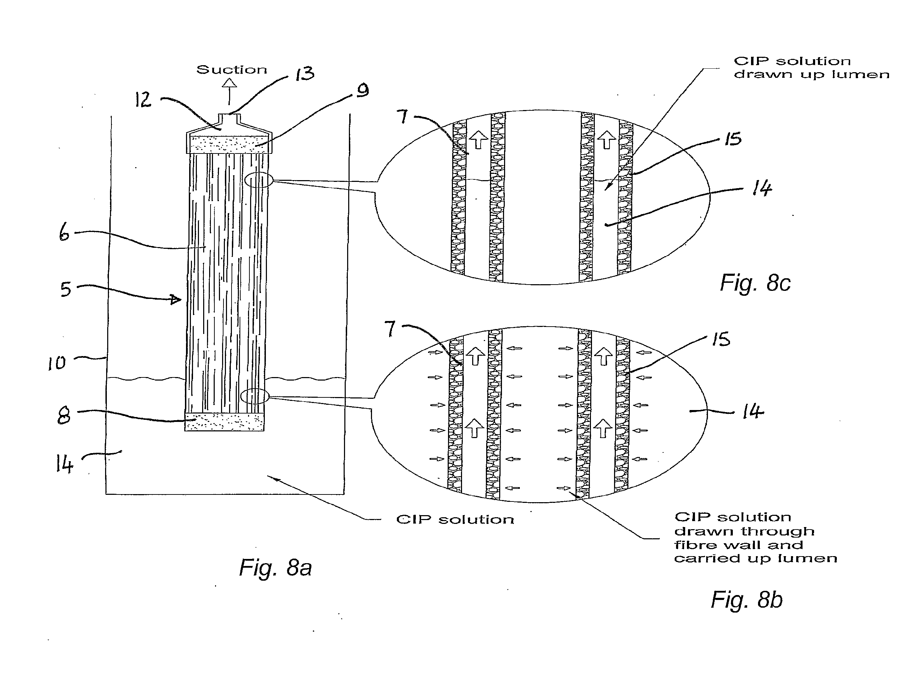

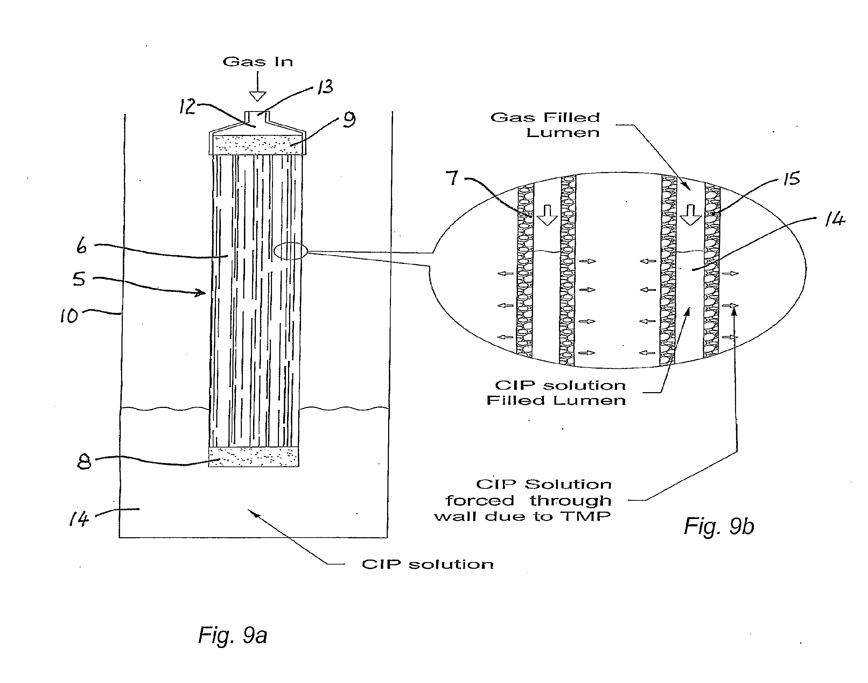

Referring to Figures 8 and 9, an embodiment of the cleaning process according to the invention is illustrated where the vessel 10 is open to atmosphere. In this embodiment flow of cleaning solution through the membrane wall 15 is provided by alternately applying suction/vacuum or pressure to the lumen side of the membranes 6. The membrane module 5 is again immersed at least partially in chemical cleaning solution 14 and suction is applied to the open ends of the fibre membrane lumens 7. As best shown in Figure 8b, the cleaning solution 14 is drawn through the membrane wall 15 and into the fibre membrane lumen 7. The cleaning solution 14 is then drawn up through the lumen 7 until it is completely filled as shown in Figure 8c. As shown in Figures 9a and 9b, pressurized gas is then applied to the cleaning solution 14 filling the membrane lumen 7 and the cleaning solution is displaced through the membrane wall 15 as previously described.

The process illustrated in the embodiments can be repeated in cycles such that cleaning solution is alternatively moved from one side of the membrane wall 15 to the other. This flow of cleaning solution to and from the membrane lumens 7 and well as along their length results in an effective chemical clean of the membrane module 5.

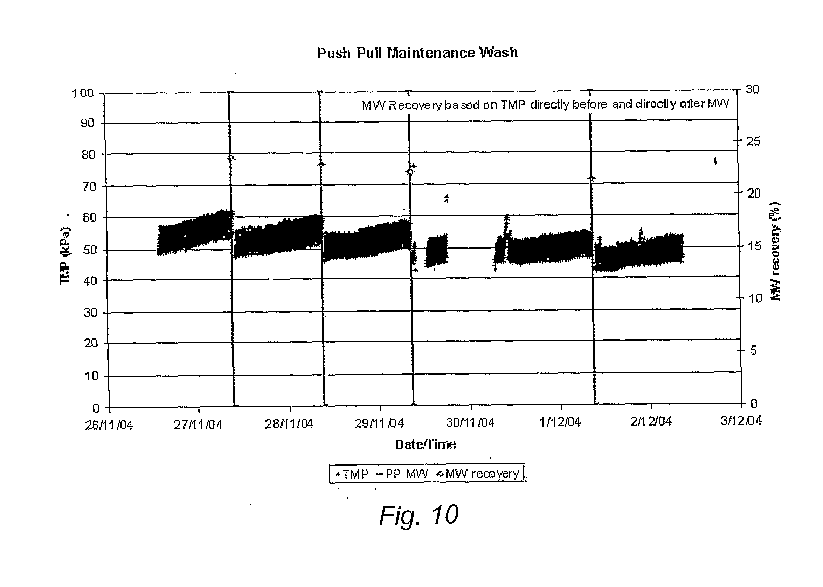

Figure 10 shows the results of applying the cleaning regime according to the invention to a membrane module of the type where the vessel 10 is open to atmosphere. The cleaning process was performed as follows:
1. The membrane vessel was filled with filtrate via backfilling from the lumen side to the shell side, with simultaneous chlorine dosing into the filtrate line. The vessel filtrate level was about 30%, with a target volume of cleaning solution (NaOCl) of 30 mL.
2. The filtrate was then recirculated briefly through the system in order to ensure a well-mixed cleaning solution.
3. The lumens were then drained of liquid by 100 kPa air being applied to the filtrate line. This allowed the cleaning solution to diffuse through the pores and down the fibre length, which raised the filtrate vessel level. This step may be ended when the liquid level stops rising.
4. The lumens were then filled with the cleaning solution by using vacuum air applied to the lumen side of the membranes. During this step the level in the filtrate tank dropped as the liquid was pulled into the fibre lumens. This step may be ended when the liquid level stops falling.
5. The lumen fill and drain steps were repeated until contact time had reached 1800 seconds.
6. After 1800 seconds of cleaning solution contact, the vessel was topped up with feed. This allowed the remaining free chlorine in the cleaning solution to contact with the part of the module that was exposed during the clean.
7. The system was then aerated to maximise contact of solution with module.
8. The tank was then drained and flushed with filtrate before returning to service.

The data graphed in Figure 10 shows a period when the cleaning regime was performed once every 24 filtration hours for 4 days in succession, with the module operating at 1.7m3/hr with a 30 minute backwash interval. Chlorine in the form of sodium hypochlorite (NaOCl) was used, the average free chlorine concentration during the clean being 100 ppm. Feed water turbidity was between 60 ― 90 NTU throughout.

The data shown in Figure 10 illustrates the regular reduction in transmembrane pressure (TMP) flowing each clean.

One embodiment of the invention seeks to minimise the amount of chemical required by adding it incrementally to the membrane tank, whilst monitoring resistance through the membrane during a recirculation stage in the cleaning process. Chemical additions can cease when the further addition of chemical leads to change in the membrane resistance below a predetermined level, hence minimising the amount of excess chemical agent used in the cleaning process.

The resistance value can be monitored during filtrate recirculation. Typically, during a standard cleaning procedure, the chemical cleaning solution is recirculated at the start of the clean only, followed by up to 48 hours of soaking of the membranes. In the present embodiment, the chemical cleaning solution is recirculated for several minutes (for example - 3 minutes) every 15 ― 30 minutes during the soak/aeration steps, allowing the membrane resistance to be measured periodically throughout the cleaning process.

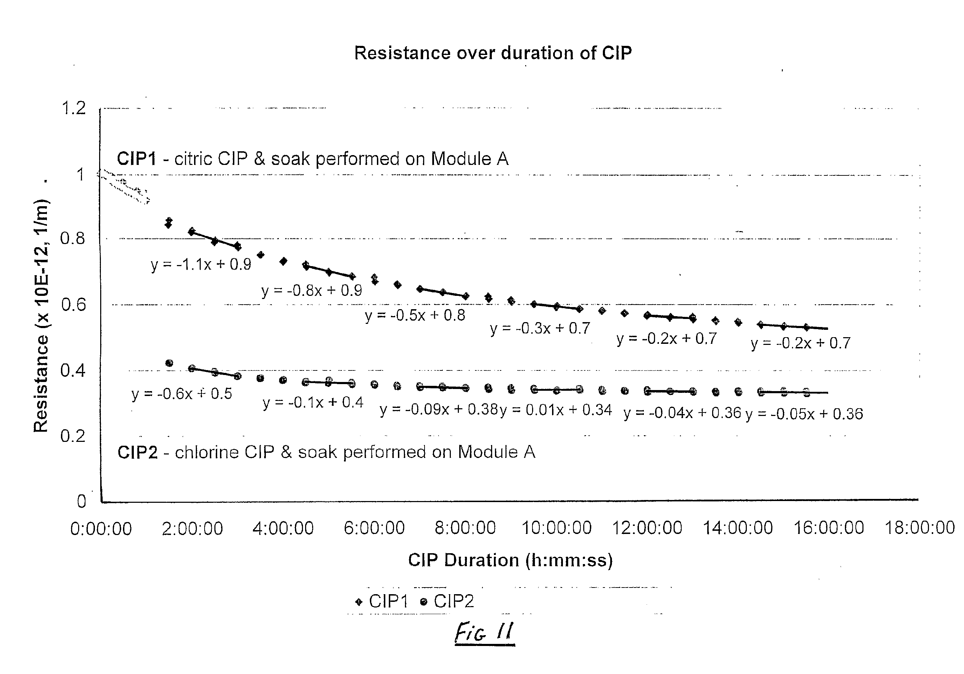

When the change in resistance per 3 recirculations drops below a predetermined value (for example -0.1) the cleaning process has recovered the maximum performance at that chemical concentration and further chemical agent is added. When the addition of further chemical agent effects the change in resistance by less than the predetermined value per 3 recirculations (for example - 0.1), no further recovery can be achieved and the cleaning process can therefore be terminated immediately. Conversely, the cleaning potential can be maximized by extending the cleaning process so that the change in resistance per 3 circulations is below a certain predetermined value. Figure 11 shows a graph of resistance value variation of the duration of the cleaning process for two different cleaning regimes using citric (ClP1 ) and chlorine (ClP2) cleaning agents.

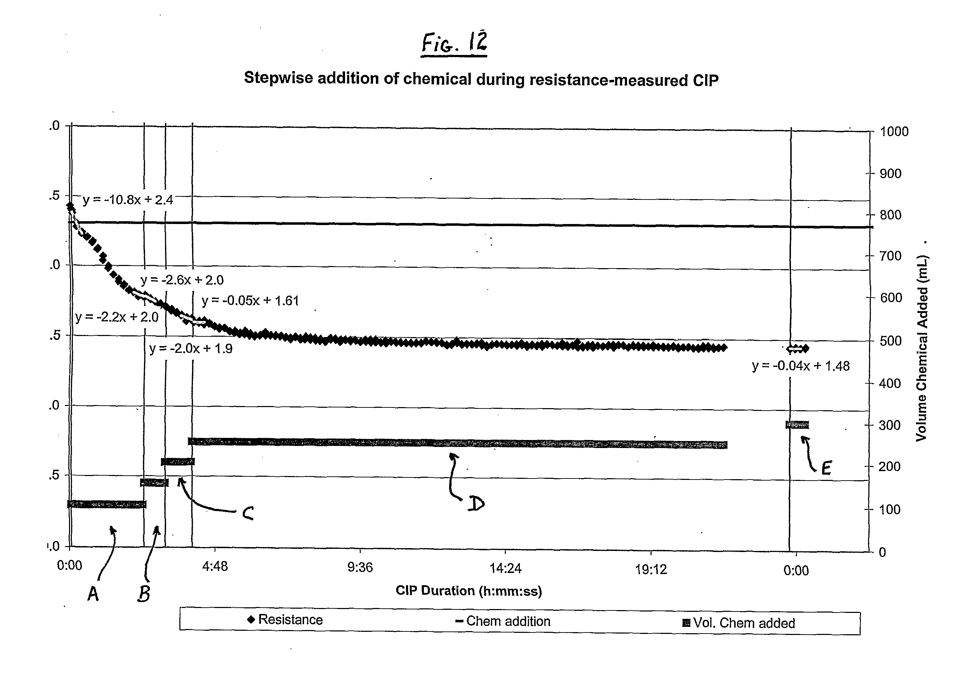

Referring to the graph shown in Figure 12, the volume of chemical agent begins around 100ml as shown at A resulted in a significant drop in membrane resistance. The amount of chemical agent was further increased as shown at B and C resulting in further decreases in membrane resistance. Once the volume of chemical agent reached about 250ml, the membrane resistance change reached substantially a steady state as shown at D and further increases (E) in chemical agent had minimal effect. At this stage the volume of chemical agent added can be ceased without adversely affecting the cleaning process and recovery in transmembrane flow.

It will be appreciated that using the above measurements it is possible to determine a resistance profile during the cleaning process for a particular membrane arrangement or configuration. The resistance profile can then be used to predict the end of cleaning process time, half-life and reduce chemical use in simultaneous cleans of similar systems. The resistance profile may be further used to determine whether chemicals are required to be added during the cleaning process with the type and amount of chemical being dependent on feed and foulant quality.

Typical cleaning solutions which may be used include acids, caustic solutions and oxidizing solutions (e.g. chlorine).

The invention may be embodied in a similar apparatus to that described in the aforementioned International Application No. WO93/02779 appropriately modified to operate in accordance with the inventive method.

It will be appreciated that further embodiments and exemplifications of the invention are possible without departing from the spirit or scope of the invention described.

## Claims

1. A method of controlling a chemical clean of a membrane comprising:
increasing the amount of chemical cleaning agent present during the clean;
measuring membrane resistance of a membrane for at least a portion of said clean; ceasing the increase in chemical cleaning agent when membrane resistance attains a predetermined value.

2. A method according to claim 1 wherein the amount of cleaning agent is increased incrementally.

3. A method according to claim 1 or claim 2 wherein the predetermined value approximates a steady-state value of membrane resistance.

4. A method of controlling a chemical clean of a membrane comprising:
measuring pH and/or membrane resistance of a membrane for at least a portion of said clean; and ceasing said chemical clean when pH and/or
membrane resistance attains a predetermined value.

5. A method of controlling a chemical clean of a membrane comprising:
measuring pH and/or membrane resistance of a membrane for at least a portion of said clean; measuring elapsed time of the clean; calculating a rate of change of pH with respect to time (dpH/dt) and/or a rate of change of membrane resistance (dR/dt) with respect to time; and
ceasing said chemical clean when dpH/dt and/or dR/dt attains a predetermined value.

6. A method of controlling the chemical cleaning of a filtration system comprising the steps of measuring membrane resistance of a membrane for at least a portion of said clean;
measuring elapsed time of the clean; calculating a rate of change of membrane resistance (dR/dt) with respect to time; and using dR/dt to calculate a duration for completion of the clean. resistance.

7. A method according to claim 1, claim 5 or claim 6 wherein the membrane is a microfiltration or ultrafiltration membrane.
